# EUROPEAN PATENT SPECIFICATION

(11) **EP 2 955 690 B1**
(45) Date of publication and mention of the grant of the patent: **17.04.2019**
(21) Application number: 15001598.0
(22) Date of filing: 27.05.2015
(51) Int. Cl.: G06T 3/00

(54) **AROUND VIEW PROVISION APPARATUS AND VEHICLE INCLUDING THE SAME**
VORRICHTUNG ZUR BEREITSTELLUNG EINER RUNDUMSICHT UND FAHRZEUG DAMIT
APPAREIL DE FOURNITURE DE VUE ALENTOUR ET VÉHICULE COMPRENANT CELUI-CI

(30) Priority: 10.06.2014 KR 20140070321
(43) Date of publication of application: 16.12.2015
(73) Proprietor: LG Electronics Inc., Yeongdeungpo-gu Seoul 150-721 (KR)
(72) Inventor: Baek, Iljoo, 137-893 Seoul (KR)
(74) Representative: Katérle, Axel

(56) References cited:
- EP-A1- 2 723 069
- CARPENDALE M S T ET AL: "A framework for unifying presentation space", UIST 01. PROCEEDINGS OF THE 14TH. ANNUAL ACM SYMPOSIUM ON USER INTERFACE SOFTWARE AND TECHNOLOGY. ORLANDO, FL, NOV. 11 - 14, 2001, 11 November 2001 (2001-11-11), pages 61-70, XP002249323,
- TARAK GANDHI ET AL: "Vehicle Surround Capture: Survey of Techniques and a Novel Omni-Video-Based Approach for Dynamic Panoramic Surround Maps", IEEE TRANSACTIONS ON INTELLIGENT TRANSPORTATION SYSTEMS, IEEE, PISCATAWAY, NJ, USA, vol. 7, no. 3, 1 September 2006 (2006-09-01), pages 293-308, XP002659721,
- KEAHEY T A ET AL: "Nonlinear magnification fields", INFORMATION VISUALIZATION, 1997, PROCEEDINGS, IEEE, LOS ALAMITOS, CA, USA, 20 October 1997 (1997-10-20), pages 51-58,121, XP010257169,
- SHEELAGH M ET AL: "3-DIMENSIONAL PLIABLE SURFACES: FOR THE EFFECTIVE PRESENTATION OF VISUAL INFORMATION", UIST '95. PROCEEDINGS OF THE ACM SYMPOSIUM ON USER INTERFACE SOFTWARE AND TECHNOLOGY. PITTSBURGH, PA, NOV. 14 - 17, 1995, 14 November 1995 (1995-11-14), pages 217-226, XP000634423,
- KEAHEY T A ET AL: "Techniques for non-linear magnification transformations", INFORMATION VISUALIZATION '96, PROCEEDINGS IEEE SYMPOSIUM ON SAN FRANCISCO, CA, USA 28-29 OCT. 1996, LOS ALAMITOS, CA, USA, IEEE COMPUT. SOC, US, 28 October 1996 (1996-10-28), pages 38-45, XP010201943,
- Anonymous: "2.39 Calibration" In: "International vocabulary of metrology - Basic and general concepts and associated terms (VIM)", 1 January 2012 (2012-01-01), JCGM - Joint Committee for Guides in Metrology, XP55303639, pages 28-28,
- B : Shneidermann: "TOUCH SCREENS NOW OFFER COMPELLING USES", IEEE Software, vol. 8, no. 2, 1 March 1991 (1991-03-01), pages 93-107, XP55303655,

## Description

### BACKGROUND

### 1. Field

The present disclosure relates to an around view provision apparatus and a vehicle including the same and, more particularly, to an around view provision apparatus that is capable of reducing distortion of an around view image and a vehicle including the same.

### 2. Background

Around view provision apparatuses and vehicles including the same are known. EP 2 723 069 discloses a vehicle surrounding-area monitoring apparatus that, when recognizing an obstacle, allows for easy determination of the positional relationship between the obstacle and scenery included in a video image of the area surrounding the vehicle, generates a narrow view-field region that is a part of the video image as a notable video image, and if an obstacle region that is a region of the recognized obstacle in the video image is located outside of the narrow view-field region and if the obstacle region is contained in an image region that is partially overlapping with the narrow view-field region and is a part of the video image, generates the image region as a notable obstacle image so as to generate a surrounding-area monitoring display image comprised of the notable video image and the notable obstacle image. However, they suffer from various disadvantages.

### BRIEF DESCRIPTION OF THE DRAWINGS

The embodiments will be described in detail with reference to the following drawings in which like reference numerals refer to like elements wherein:
Figure 1 is a view showing the external appearance of a vehicle having around view cameras according to an embodiment of the present disclosure;
Figure 2A is a view schematically showing positions of the around view cameras attached to the vehicle shown in Figure 1;
Figure 2B is a view showing an around view image based on images captured by the around view cameras of Figure 2A;
Figures 3A and 3B are internal block diagrams showing various examples of an around view provision apparatus according to an embodiment of the present disclosure;
Figures 4A and 4B are internal block diagrams showing various examples of a processor shown in Figure 3;
Figure 5 is a series of views showing object detection performed by the processor of Figures 4A and 4B;
Figure 6 is an internal block diagram showing an example of a vehicle according to an embodiment of the present disclosure;
Figure 7 is a flowchart showing an operation method of the around view provision apparatus according to the embodiment of the present disclosure; and
Figures 8A to 14 are reference views illustrating the operation method of the around view provision apparatus shown in Figure 7.

### DETAILED DESCRIPTION

Exemplary embodiments of the present disclosure will be described with reference to the attached drawings.

The terms "module" and "unit," when attached to the names of components are used herein to help the understanding of the components and thus they should not be considered as having specific meanings or roles. Accordingly, the terms "module" and "unit" may be used interchangeably.

Broadly, a vehicle is a device that allows a driver to move in a desired direction. A representative example of the vehicle may be a car. In order to improve convenience of a user who uses the vehicle, the vehicle may be equipped with various sensors and electronic devices. In particular, various devices to improve driving convenience of the user have been developed. For example, an image captured by a rear view camera may be provided when moving the vehicle backward or when parking the vehicle.

A vehicle as described in this specification may include a car, a motorcycle, or another appropriate type of vehicle. Hereinafter, a description will be given based on a car merely for sake of convenience.

It should be appreciated, however, that a vehicle as described in this disclosure may include various types of transportation devices, including but not limited to, a vehicle having an engine as a power source, a hybrid vehicle having an engine and an electric motor as a power source, an electric vehicle having an electric motor as a power source, or the like.

Meanwhile, an around view provision apparatus as described in this specification may be an apparatus that includes a plurality of cameras and which combines a plurality of images captured by the cameras to generate an around view image. In particular, the around view provision apparatus may be a vehicle-based apparatus that provides a top view or a bird's eye view. It is one object of the present disclosure to provide an around view provision apparatus that is capable of reducing distortion of an around view image and a vehicle including the same. Hereinafter, a description will be given of various embodiments of an around view provision apparatus according to the present disclosure and a vehicle including the same.

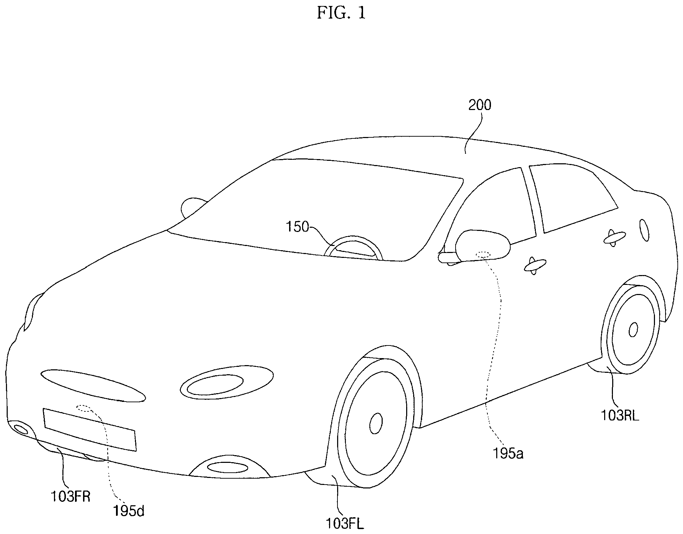

Figure 1 is a view showing the external appearance of a vehicle having around view cameras according to an embodiment of the present disclosure.

A vehicle 200 may include a wheels 103FR, 103FL, 103RL, etc., a steering wheel 150, and a plurality of around view cameras 195a, 195b, 195c, and 195d mounted on the vehicle 200. In Figure 1, only a left side view camera 195a and a front view camera 195d are shown merely for the sake of convenience.

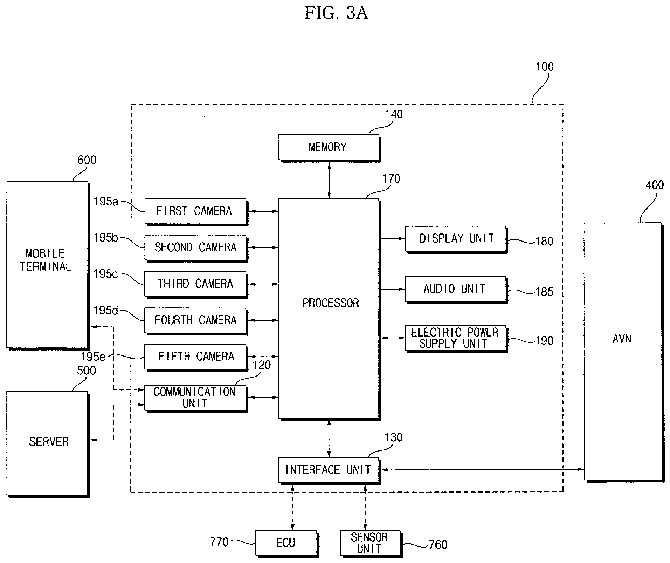

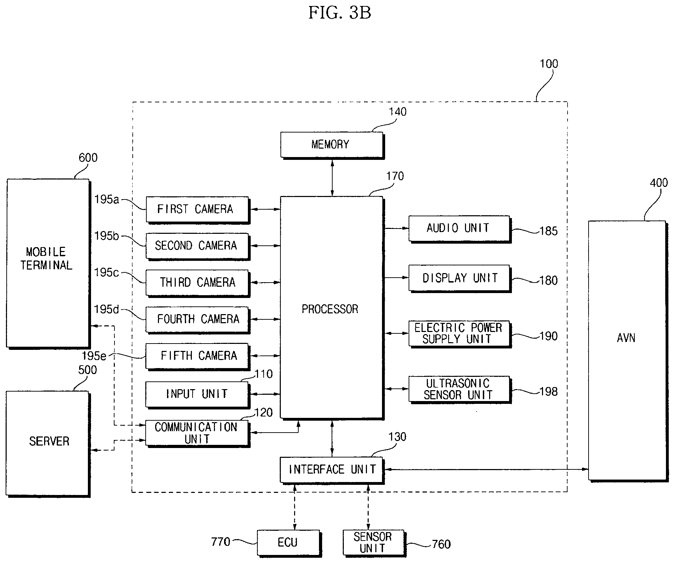

When the vehicle moves forward at a predetermined speed or less or when the vehicle moves backward, the around view cameras 195a, 195b, 195c, and 195d may be activated to acquire images. The images acquired by the cameras may be signal-processed by an around view provision apparatus 100 (see Figure 3A or 3B). Moreover, the cameras may capture various types of images such as record video images or photograph still images, and the around view provision apparatus as described in various embodiments herein may be applied to these types of images.

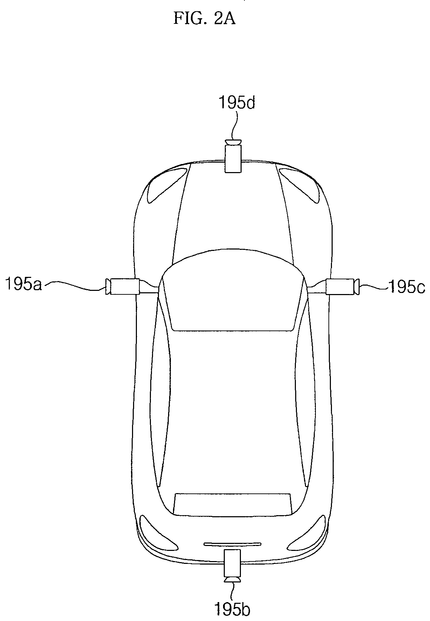

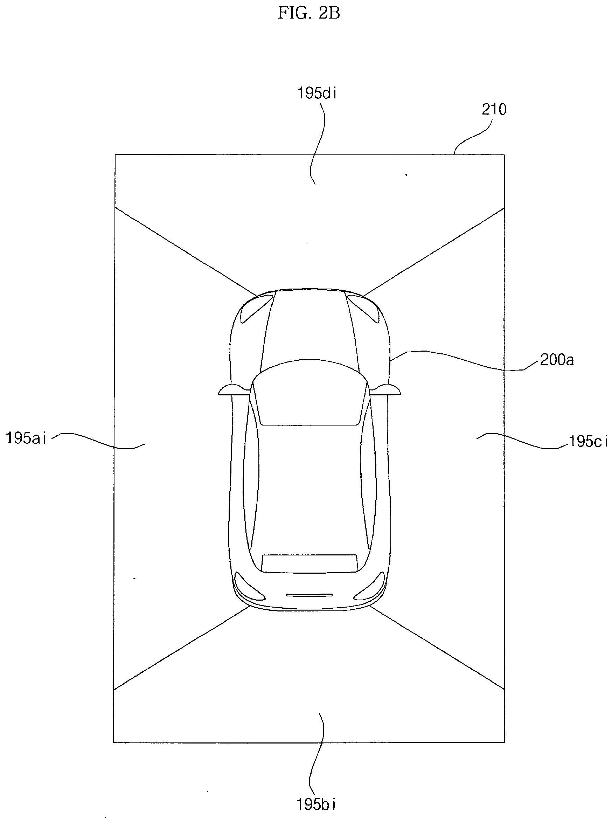

Figure 2A is a view schematically showing positions of the around view cameras attached to the vehicle shown in Figure 1 and Figure 2B is a view illustrating an around view image based on images captured by the around view cameras of Figure 2A.

Referring first to Figure 2A, the around view cameras 195a, 195b, 195c, and 195d may be disposed at the left side, the rear, the right side, and the front of the vehicle, respectively. In particular, the left side view camera 195a and the right side view camera 195c may be disposed in a case (or casing, housing, cover, etc.) surrounding a left side view mirror and a case surrounding a right side view mirror, respectively. On the other hand, the rear view camera 195b and the front view camera 195d may be disposed around a trunk switch and at an emblem or around the emblem, respectively.

A plurality of images captured by the around view cameras 195a, 195b, 195c, and 195d may be transmitted to a processor 170 (see Figure 3A or 3B) in the vehicle 200. The processor 170 (see Figure 3A or 3B) may combine the images to generate an around view image.

Figure 2B shows an example of an around view image 210. The around view image 210 may include a first image region 195ai from the left side view camera 195a, a second image region 195bi from the rear view camera 195b, a third image region 195ci from the right side view camera 195c, and a fourth image region 195di from the front view camera 195d.

Figures 3A and 3B are internal block diagrams showing various examples of an around view provision apparatus according to an embodiment of the present disclosure.

An around view provision apparatus 100 shown in Figures 3A and 3B may combine a plurality of images captured by a plurality of cameras 195a, 195b, 195c, and 195d to generate an around view image. On the other hand, the around view provision apparatus 100 may also detect, verify, track and display an object around the vehicle based on a plurality of images captured by the cameras 195a, 195b, 195c, and 195d.

Referring first to Figure 3A, the around view provision apparatus 100 may include a communication unit 120, an interface unit 130, a memory 140, a processor 170, a display unit 180, an audio interface unit 185, an electric power supply unit 190, and a plurality of around view cameras 195a, 195b, 195c, 195d, and 195e. The audio interface unit 185 may include an audio input and/or an audio output devices.

The communication unit 120 may exchange data with a mobile terminal 600 or a server 500 in a wireless fashion. In particular, the communication unit 120 may exchange data with a mobile terminal of the driver in a wireless fashion. To this end, various wireless data communication protocols, such as Bluetooth, Wi-Fi, Wi-Fi Direct, and APiX, may be used.

The communication unit 120 may receive weather information and road traffic state information, such as Transport Protocol Expert Group (TPEG) information, from the mobile terminal 600 or the server 500. On the other hand, the communication unit 120 may transmit real-time traffic information acquired by the around view provision apparatus 100 based on images to the mobile terminal 600 or the server 500. When a user gets into the vehicle, a mobile terminal 600 of the user may pair with the around view provision apparatus 100 automatically or by the user executing an application.

The interface unit 130 may receive vehicle-related data or transmit a signal processed or generated by the processor 170 to the outside. To this end, the interface unit 130 may perform data communication with an electronic control unit (ECU) 770, an audio and video navigation (AVN) apparatus 400, and a sensor unit 760 in the vehicle in a wired communication fashion or a wireless communication fashion.

The interface unit 130 may receive map information related to vehicle travel through data communication with the AVN apparatus 400. On the other hand, the interface unit 130 may receive sensor information from the ECU 770 and the sensor unit 760.

The sensor information may include at least one selected from among vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, and in-vehicle humidity information.

Of the above-specified sensor information, the vehicle heading information, the vehicle position information, the vehicle angle information, the vehicle speed information, and the vehicle tilt information, which are related to vehicle travel, may be referred to as vehicle travel information.

The memory 140 may store various data for overall operation of the around view provision apparatus 100, such as programs for processing or control of the processor 170.

The audio interface unit 185 may convert electric signal received from the processor 170 into an audio signal and output the audio signal. To this end, the audio interface unit 185 may include a speaker. The audio interface unit 185 may output a sound corresponding to an operation of an input unit (not shown), e.g. a button. The audio input unit may detect a user's voice. To this end, the audio input unit may include a microphone. The received voice may be converted into an electric signal, which may be transmitted to the processor 170.

The processor 170 may control overall operation of each unit in the around view provision apparatus 100. In particular, the processor 170 may acquire a plurality of images from the cameras 195a, 195b, 195c, and 195d and combine the acquired images to generate an around view image.

On the other hand, the processor 170 may perform signal processing based on computer vision. For example, the processor 170 may calculate disparity for a view around the vehicle based on the acquired images or the generated around view image, detect an object in the image based on calculated disparity information, and continuously track motion of the object after detection of the object.

In particular, during detection of the object, the processor 170 may perform lane detection, adjacent vehicle detection, pedestrian detection, and road surface detection. In addition, the processor 170 may calculate the distance to the detected adjacent vehicle or the detected pedestrian.

On the other hand, the processor 170 may receive sensor information from the ECU 770 or the sensor unit 760 through the interface unit 130. The sensor information may include at least one of vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, or in-vehicle humidity information.

The display unit 180 may display the around view image generated by the processor 170. During display of the around view image, the display unit 180 may provide various user interfaces. In addition, the display unit 180 may include a touch sensor to sense a touch input to each user interface.

Meanwhile, the display unit 180 may include a cluster or a head up display (HUD) provided at the inside front of the vehicle. In a case in which the display unit 180 is the HUD, the display unit 180 may include a projection module to project an image on the front windshield glass of the vehicle 200.

The electric power supply unit 190 may supply electric power to the respective components under control of the processor 170. In particular, electric power from an in-vehicle battery may be supplied to the electric power supply unit 190.

The cameras 195a, 195b, 195c, and 195d may be cameras to provide an around view image. The cameras 195a, 195b, 195c, and 195d may be wide-angle cameras. Moreover, the around view provision apparatus may include additional cameras. For example, a camera 195e may be an indoor camera mounted in the vehicle to capture a user, specifically a driver. The processor 170 may detect the position of the driver based on an image from the indoor camera, set a region that cannot be observed by a side view mirror or a rear view mirror based on the position of the driver (e.g., blind spot), and control at least one of the cameras to be operated in a first mode, which is referred to as a blind spot detection (BSD) mode, in which at least one of the cameras is moved (e.g., tilted or rotated) to capture the region that cannot be observed by the side view mirror or the rear view mirror.

Referring now to Figure 3B, the around view provision apparatus 100 of Figure 3B may be similar to the around view provision apparatus 100 of Figure 3A except that the around view provision apparatus 100 of Figure 3B may further include an input unit 110 and a sensor unit 198. In a non-limiting example, the sensor unit 198 may include ultrasonic sensors, and the sensor unit 198 may be referred to as an ultrasonic sensor unit 198. Hereinafter, for sake of brevity, a description will be given of only the input unit 110 and the ultrasonic sensor unit 198.

The input unit 110 may include a plurality of buttons attached around the display unit 180 or a touchscreen disposed on the display unit 180. The around view provision apparatus 100 may be powered on through the buttons or the touchscreen such that the around view provision apparatus 100 can be operated. On the other hand, various input operations may be performed through the input unit 110.

The ultrasonic sensor unit 198 may include a plurality of ultrasonic sensors. In a case in which the ultrasonic sensors are mounted in the vehicle, the ultrasonic sensor unit 198 may sense an object around the vehicle based on a difference between transmitted ultrasonic waves and received ultrasonic waves.

Unlike Figure 3B, on the other hand, Light Detection And Ranging (LiDAR) (not shown) may be provided instead of the ultrasonic sensor unit 198. Alternatively, both the ultrasonic sensor unit 198 and the LiDAR may be provided.

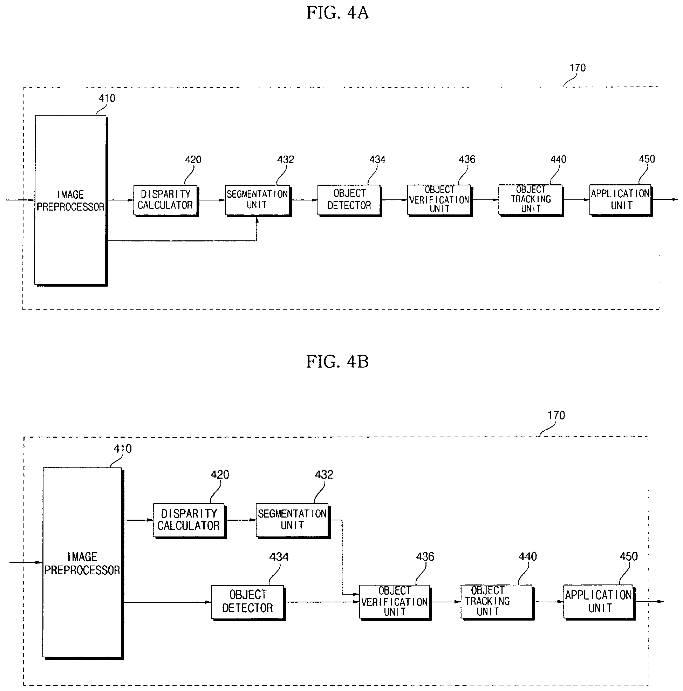

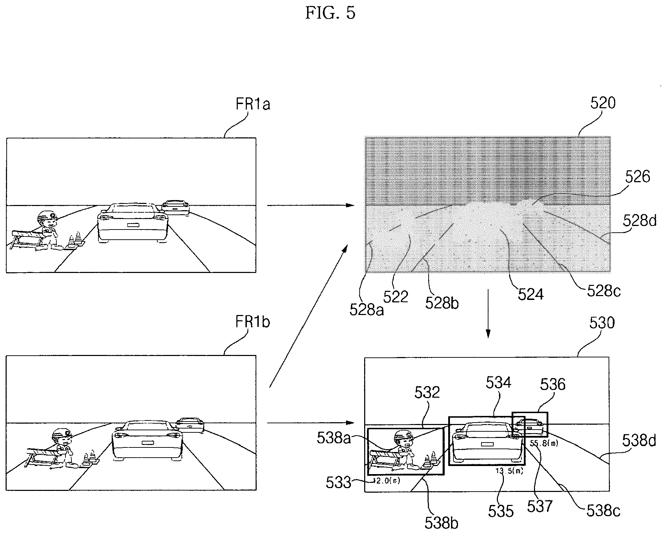

Figures 4A and 4B are internal block diagrams showing various examples of the processor shown in Figure 3 and Figure 5 is a series of views showing object detection performed by the processor of Figure 4A and 4B.

Referring first to Figure 4A, which is an internal block diagram showing an example of the processor 170, the processor 170 of the around view provision apparatus 100 may include an image preprocessor 410, a disparity calculator 420, a segmentation unit 432, an object detector 434, an object verification unit 436, an object tracking unit 440, and an application unit 450.

The image preprocessor 410 may receive a plurality of images from the cameras 195a, 195b, 195c, and 195d or a generated around view image and preprocess the plurality of images or the generated around view image.

Specifically, the image preprocessor 410 may perform noise reduction, rectification, calibration, color enhancement, color space conversion (CSC), interpolation, camera gain control, or the like, for the plurality of images or the generated around view image. As a result, the image preprocessor 410 may acquire an image that is more vivid than the plurality of images from the cameras 195a, 195b, 195c, and 195d or the generated around view image.

The disparity calculator 420 may receive the plurality of images or the generated around view image signal-processed by the image preprocessor 410, sequentially performs stereo matching for the received plural images or the received around view image for a predetermined time, and acquires a disparity map based on the stereo matching. That is, the disparity calculator 420 may acquire disparity information for a view around the vehicle. The stereo matching may be performed on a per pixel basis or a per predetermined block basis of the images. Meanwhile, the disparity information may be included in a map showing binocular parallax information as values.

The segmentation unit 432 may perform segmentation and clustering in the images based on the disparity information from the disparity calculator 420. Specifically, the segmentation unit 432 may segment at least one of the images into a background and a foreground based on the disparity information.

For example, a region having a predetermined value or less of the disparity information in the disparity map may be calculated as a background and the region may be excluded. As a result, a foreground may be relatively separated from the image. In another example, a region having a predetermined value or more of the disparity information in the disparity map may be calculated as a foreground and the region may be extracted. As a result, the foreground may be separated from the image.

As described above, the image may be segmented into the background and the foreground based on the disparity information extracted based on the image. Therefore, signal processing speed and signal processing amount may be reduced during detection of an object.

The object detector 434 may detect an object based on the image segment from the segmentation unit 432. That is, the object detector 434 may detect an object for at least one of the images based on the disparity information. For example, the object detector 434 may detect an object from a foreground separated from the image by the image segment.

Subsequently, the object verification unit 436 may classify and verify the separated object. To this end, the object verification unit 436 may use a recognition method using a neural network, a support vector machine (SVM) method, a recognition method based on AdaBoost using a Haar-like feature, a histogram of oriented gradients (HOG) method, or another appropriate technique.

On the other hand, the object verification unit 436 may compare the detected object with objects stored in the memory 140 to verify the detected object. For example, the object verification unit 436 may verify an adjacent vehicle, a lane, a road surface, a traffic sign, a dangerous zone, a tunnel, etc. located around the vehicle.

The object tracking unit 440 may track the verified object. For example, the object tracking unit 440 may verify an object in images which are sequentially acquired, calculate motion or a motion vector of the verified object, and track movement of the object based on the calculated motion or the calculated motion vector. Consequently, the object tracking unit 440 may track an adjacent vehicle, a lane, a road surface, a traffic sign, a dangerous zone, etc. located around the vehicle.

Figure 4B is an internal block diagram showing another example of the processor 170. The processor 170 of Figure 4B is substantially the same as the processor 170 of Figure 4A except that a signal processing sequence of the processor 170 of Figure 4B may be different from that of the processor 170 of Figure 4A. Hereinafter, a description will be given of only the difference between the processor 170 of Figure 4B and the processor 170 of Figure 4A.

The object detector 434 may receive a plurality of images or a generated around view image and detect an object in the plural images or the generated around view image. Unlike Figure 4A, the object detector 434 may not detect an object for an image segmented based on disparity information but directly detect an object from the plurality of images or the generated around view image.

Subsequently, the object verification unit 436 may classify and verify the detected and separated object based on the image segment from the segmentation unit 432 and the object detected by the object detector 434. To this end, the object verification unit 436 may use a recognition method using a neural network, an SVM method, a recognition method based on AdaBoost using a Haar-like feature, a HOG method, or the like.

Figure 5 is a series of reference views illustrating an operation of the processor 170 shown in Figure 4A or 4B based on images acquired from first and second frame periods. The cameras 195a, 195b, 195c, and 195d may sequentially acquire images FRla and FRlb during the first and and second frame periods.

The disparity calculator 420 of the processor 170 may receive the images FR1a and FRlb signal-processed by the image preprocessor 410 and may perform stereo matching for the received images FRla and FRlb to acquire a disparity map 520. The disparity map 520 may show a disparity between the images FRla and FRlb as levels. When a disparity level is high, the distance to the vehicle may be calculated as being short. When a disparity level is low, on the other hand, the distance to the vehicle may be calculated as being long.

Meanwhile, when the disparity map is displayed, the disparity map may be displayed with higher brightness when the disparity level is higher and the disparity map may be displayed with lower brightness when the disparity level is lower.

By way of example, Figure 5 shows that in the disparity map 520, first to fourth lanes 528a, 528b, 528c, and 528d may have their own disparity levels and a construction zone 522, a first preceding vehicle 524, and a second preceding vehicle 526 may have their own disparity levels.

The segmentation unit 432, the object detector 434, and the object verification unit 436 may respectively perform segmentation, object detection, and object verification for at least one of the images FRla and FRlb based on the disparity map 520. Moreover, object detection and object verification for the second image FRlb may be performed using the disparity map 520. That is, object detection and object verification for first to fourth lanes 538a, 538b, 538c, and 538d, a construction zone 532, a first preceding vehicle 534, and a second preceding vehicle 536 in an image 530 may be performed.

Meanwhile, images may be continuously acquired and the object tracking unit 440 may track verified objects.

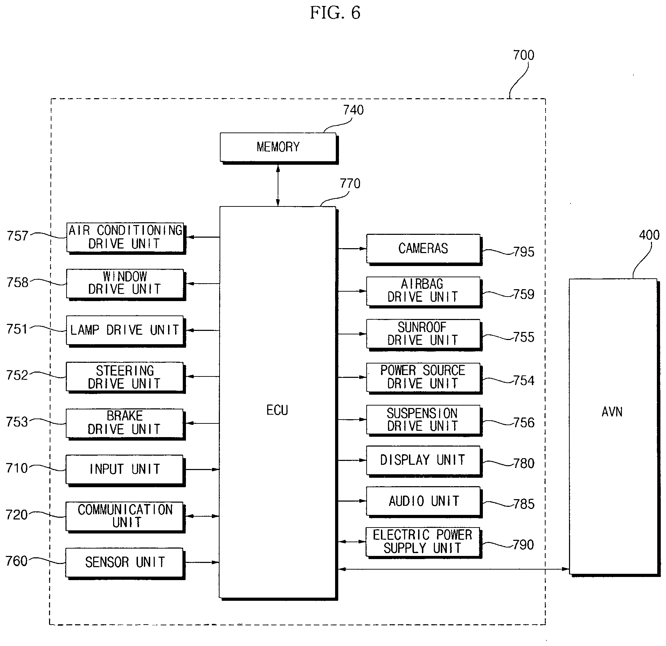

Figure 6 is an internal block diagram showing an example of a vehicle according to an embodiment of the present disclosure.

The vehicle 200 may include an electronic control apparatus 700 for vehicle control. The electronic control apparatus 700 may exchange data with the AVN apparatus 400.

The electronic control apparatus 700 may include an input unit 710, a communication unit 720, a memory 740, a lamp drive unit 751, a steering drive unit 752, a brake drive unit 753, a power source drive unit 754, a sunroof drive unit 755, a suspension drive unit 756, an air conditioning drive unit 757, a window drive unit 758, an airbag drive unit 759, a sensor unit 760, an ECU 770, a display unit 780, an audio output unit 785, an electric power supply unit 790, a plurality of cameras 795.

Meanwhile, the ECU 770 may include a processor. Alternatively, an additional processor to signal-process images from the cameras may be provided in addition to the ECU 770. The input unit 710 may include a plurality of buttons or a touchscreen provided in the vehicle 200. Various input operations may be performed through the buttons or the touchscreen.

The communication unit 720 may exchange data with the mobile terminal 600 or the server 500 in a wireless fashion. In particular, the communication unit 720 may exchange data with a mobile terminal of the driver in a wireless fashion. To this end, various wireless data communication protocols, such as Bluetooth, Wi-Fi, Wi-Fi Direct, and APiX, may be used.

In one example, the communication unit 720 may receive weather information and road traffic state information, such as TPEG information, from the mobile terminal 600 or the server 500. When a user gets into the vehicle, a mobile terminal 600 of the user may pair with the electronic control apparatus 700 automatically or by the user executing an application.

The memory 740 may store various data for overall operation of the electronic control apparatus 700, such as programs for processing or control of the ECU 770.

The lamp drive unit 751 may control turn on/turn off of lamps provided inside and outside the vehicle. In addition, the lamp drive unit 751 may control intensity, direction, etc. of light emitted from each lamp. For example, the lamp drive unit 751 may control a direction indicating lamp, a brake lamp, etc.

The steering drive unit 752 may electronically control a steering apparatus (not shown) in the vehicle 200. Consequently, the steering drive unit 752 may change a heading of the vehicle.

The brake drive unit 753 may electronically control a brake apparatus in the vehicle 200. For example, the brake drive unit 753 may control an operation of a brake mounted at each wheel to reduce speed of the vehicle 200. In another example, the brake drive unit 753 may differently control operations of brakes mounted at left wheels and right wheels to adjust the heading of the vehicle 200 to the left or the right.

The power source drive unit 754 may electronically control a power source in the vehicle 200. For example, when the power source is an engine using fossil fuel, the power source drive unit 754 may electronically control the engine. Consequently, the power source drive unit 754 may control output torque of the engine. In another example, when the power source is an electric motor, the power source drive unit 754 may control the motor. Consequently, the power source drive unit 754 may control rotational speed and torque of the motor.

The sunroof drive unit 755 may electronically control a sunroof apparatus in the vehicle 200. For example, the sunroof drive unit 755 may control a sunroof to be opened or closed.

The suspension drive unit 756 may electronically control a suspension apparatus in the vehicle 200. For example, when a road surface is uneven, the suspension drive unit 756 may control the suspension apparatus to reduce vibration of the vehicle 200.

The air conditioning drive unit 757 may electronically control an air conditioner in the vehicle 200. For example, when the internal temperature of the vehicle is high, the air conditioning drive unit 757 may control the air conditioner to supply cool air into the vehicle.

The window drive unit 758 may electronically control a window apparatus in the vehicle 200. For example, the window drive unit 758 may control left and right side windows of the vehicle to be opened or closed.

The airbag drive unit 759 may electronically control an airbag apparatus in the vehicle 200. For example, the airbag drive unit 759 may control an airbag to deploy in a dangerous situation.

The sensor unit 760 may sense a signal related to travel of the vehicle 200. To this end, the sensor unit 760 may include a heading sensor, a yaw sensor, a gyro sensor, a position module, a vehicle forward movement/backward movement sensor, a wheel sensor, a vehicle speed sensor, a vehicle body tilt sensor, a battery sensor, a fuel sensor, a tire sensor, a steering sensor, an in-vehicle temperature sensor, an in-vehicle humidity sensor or another appropriate type of sensor.

Consequently, the sensor unit 760 may acquire a sensing signal for vehicle heading information, vehicle position information (GPS information), vehicle angle information, vehicle speed information, vehicle acceleration information, vehicle tilt information, vehicle forward movement/backward movement information, battery information, fuel information, tire information, vehicle lamp information, in-vehicle temperature information, in-vehicle humidity information, and the like. In addition, the sensor unit 760 may further include an engine speed sensor, an air flow sensor (AFS), an intake air temperature sensor (ATS), a water temperature sensor (WTS), a throttle position sensor (TPS), a top dead center (TDC) sensor, and a crank angle sensor (CAS).

The ECU 770 may control overall operation of each unit in the electronic control apparatus 700. The ECU 770 may perform a specific operation based on an input through the input unit 710, receive and transmit a signal sensed by the sensor unit 760 to the around view provision apparatus 100, receive map information from the AVN apparatus 400, or control operations of the respective drive units 751, 752, 753, 754, and 756. In addition, the ECU 770 may receive weather information and road traffic state information, such as TPEG information, from the communication unit 720.

On the other hand, the ECU 770 may combine a plurality of images received from the plurality of cameras 795 to generate an around view image. In particular, when the vehicle moves forward at a predetermined speed or less or when the vehicle moves backward, the ECU 770 may generate an around view image. The display unit 780 may display the generated around view image. In particular, the display unit 180 may provide various user interfaces in addition to the around view image.

In order to display the around view image, etc., the display unit 780 may include a cluster or an HUD provided at the inside front of the vehicle. In a case in which the display unit 180 is the HUD, the display unit 180 may include a projection module to project an image on the front windshield glass of the vehicle 200. Meanwhile, the display unit 780 may include a touchscreen to allow input by tapping on the screen.

The audio unit 785 may convert an electric signal received from the ECU 770 into an audio signal and output the audio signal. To this end, the audio unit 785 may include a speaker. The audio unit 785 may output a sound corresponding to an operation of the input unit 710, e.g. a button. The audio unit 785 may also include a microphone to receive sound. Hence, the audio unit 785 may include an audio input unit and an audio output unit.

The electric power supply unit 790 may supply electric power to the respective components under control of the ECU 770. In particular, electric power from an in-vehicle battery may be supplied to the electric power supply unit 790.

The plurality of cameras 795 may be used to provide an around view image. To this end, the plurality of cameras 795 may include four cameras as shown in Figure 2A. For example, a plurality of around view cameras 195a, 195b, 195c, and 195d may be disposed at the left side, the rear, the right side, and the front of the vehicle, respectively. A plurality of images captured by the plurality of cameras 795 may be transmitted to the ECU 770 or an additional processor.

Meanwhile, when generating an around view image using images captured by the around view cameras 195a, 195b, 195c, and 195d, it may be necessary to provide an around view image having correct magnifying power without distortion.

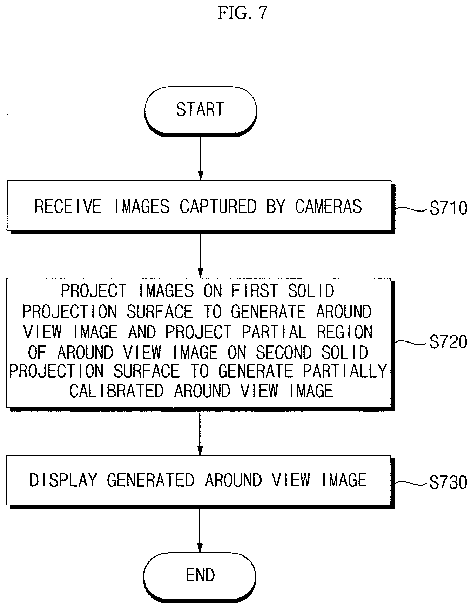

However, a partial region of the around view image may be distorted depending upon disposition of the around view cameras 195a, 195b, 195c, and 195d in the vehicle. The present disclosure proposes a method of reducing such distortion, which will hereinafter be described with reference to Figures 7 to 14.

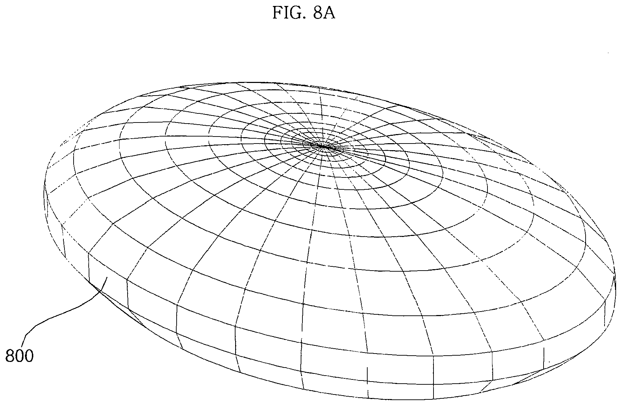

Figure 7 is a flowchart of a method of operating the around view provision apparatus according to the embodiment of the present disclosure and Figures 8A to 14 are reference views illustrating the method of operating the around view provision apparatus of Figure 7.

Referring first to Figure 7, the processor 170 of the around view provision apparatus 100 may receive images captured by the around view cameras 195a, 195b, 195c, and 195d, in Step S710. As shown in Figure 2A, the around view cameras 195a, 195b, 195c, and 195d may be disposed at the left side, the rear, the right side, and the front of the vehicle, respectively.

In particular, the left side view camera 195a and the right side view camera 195c may be disposed in the case surrounding the left side view mirror and the case surrounding the right side view mirror, respectively. On the other hand, the rear view camera 195b and the front view camera 195d may be disposed, for example, around the trunk switch and at the emblem or around the emblem, respectively. The images captured by the around view cameras 195a, 195b, 195c, and 195d may be transmitted to the processor 170 in the vehicle 200.

Subsequently, the processor 170 of the around view provision apparatus 100 may project the received images on a first solid projection surface to generate an around view image and may project a partial region of the around view image on a second solid projection surface, to generate a partially calibrated around view image, in Step S720. The first and second solid projection surfaces may be virtual surfaces having prescribed contours onto which the captured images may be projected.

Subsequently, the processor 170 of the around view provision apparatus 100 may control the generated around view image to be displayed on the display unit 180, in Step S730. The processor 170 may perform signal processing to a top view or a bird's eye view based on the vehicle using the images captured by the around view cameras 195a, 195b, 195c, and 195d.

Figure 8A shows, by way of example, an oval solid projection surface 800 as the first solid projection surface. In order to provide a top view or a bird's eye view, the processor 170 may project images on the oval solid projection surface 800 as shown in Figure 8A and perform nonlinear scaling for regions in the respective images using a scaling factor corresponding to the projection surface. In addition, the processor 170 may combine the nonlinearly scaled images to generate an around view image.

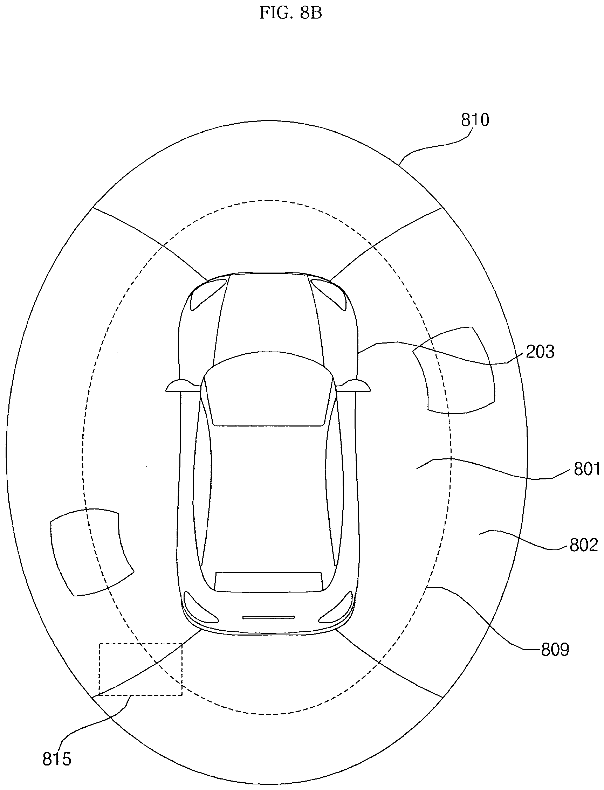

Figure 8B shows, by way of example, an around view image 810 acquired by projecting images on the oval solid projection surface 800. When the respective images are projected on the oval solid projection surface 800, regions spaced a predetermined distance or more from a vehicle image 203 may be distorted due to excessive scaling, particularly excessive downscaling. Here, an inner region 801 adjacent to the vehicle image 203 and an outer region 802 distant from the vehicle image 203 may be partitioned from each other by an oval line 809.

In particular, as illustrated in Figure 8B, distortion may occur at a boundary region 815 between the images from the left side view camera and the rear view camera in the outer region 802 which is distant from the vehicle image 203. The image boundary region 815 may be distorted due to excessive downscaling and may appear as if the size of the image boundary region 815 is smaller than the actual size.

The size of the image boundary region 815 may be much smaller than that of the vehicle image 203. As a result, the acquired around view image 810 displayed through the display unit 180 may appear to have unnatural perspective to a driver or a user viewing the around view image 180. For this reason, it may be necessary for the processor 170 to control the above regions to be scaled with different magnifying power using a second solid projection surface having a different contour from the first solid projection surface.

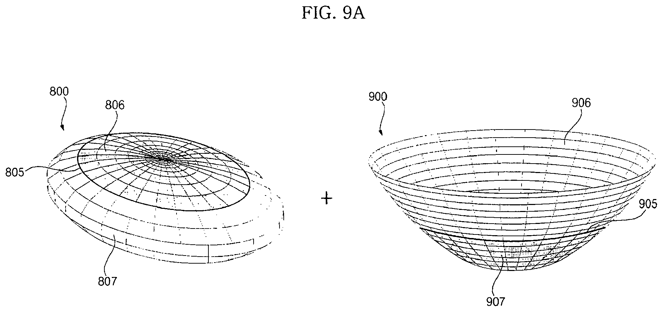

Figure 9A shows that images are projected on an upper region, e.g., a first region 806, of the oval solid projection surface 800 while partial regions of the respective images are projected on a lower region, e.g., a second region 907, of a conical oval solid projection surface 900. The upper region 806 and a lower region 807 of the oval solid projection surface 800 are partitioned from each other by a first curved line 805. An upper region 906 and the lower region 907 of the conical oval solid projection surface 900 are partitioned from each other by a second curved line 905.

Consequently, the processor 170 may scale the lower region 907 of the conical oval solid projection surface 900 with magnifying power different from that in scaling of the oval solid projection surface 800. That is, the processor 170 may not scale down the lower region 907 but may scale up the lower region 907. As a result, it is possible to generate an around view image without distortion, a partial region of which appears more realistic and more closely representing the actual objects. In other words, it may be possible to generate an around view image in which the outer region that is distant from the vehicle image is not distorted.

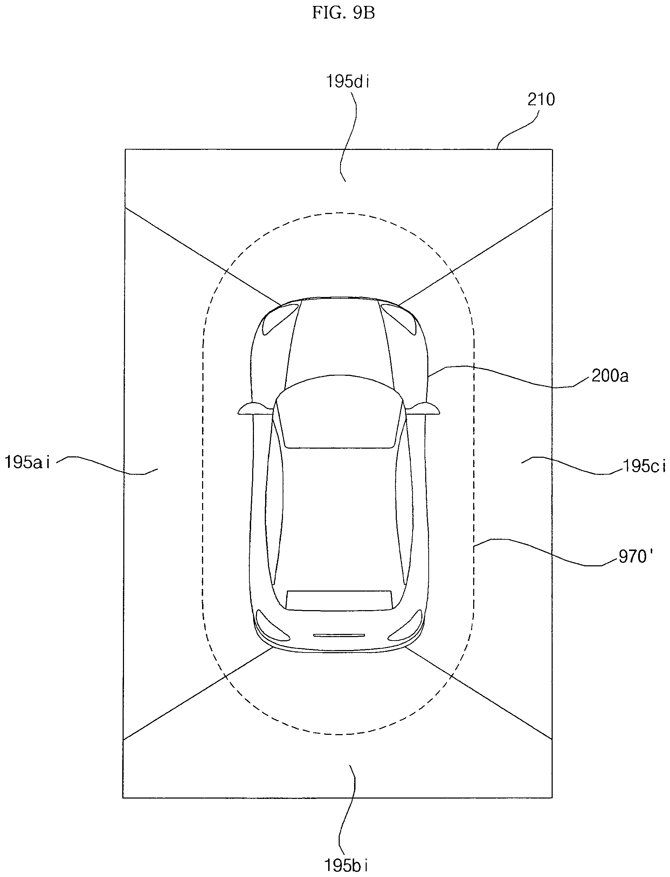

Figure 9B shows, by way of example, an around view image 210. The around view image 210 is similar to the around view image of Figure 2B, but may include distortions in the images as previously described. A distorted region 970' may be a partial region (e.g., outer region or regions containing objects), and distortions in this region may be reduced as described hereinafter. The around view image 210 may include a first image region 195ai from the left side view camera 195a, a second image region 195bi from the rear view camera 195b, a third image region 195ci from the right side view camera 195c, and a fourth image region 195di from the front view camera 195d.

Meanwhile, upon receiving a selection input to select a predetermined region of the around view image displayed on the display unit 180, the processor 170 may project the region of the around view image corresponding to the selection input on the second solid projection surface to generate a partially calibrated around view image.

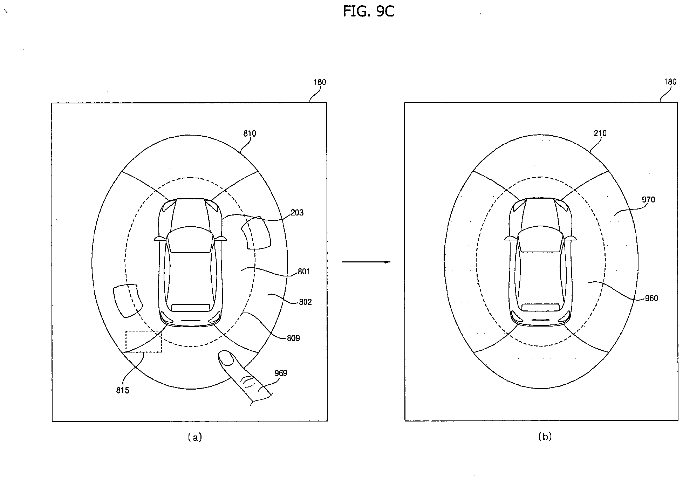

Figure 9C(a) shows, by way of example, that, when the around view image 810 before calibration is displayed on the display unit 180, the outer region 802 of the around view image 810 before calibration may be selected by a touch input. When the display unit 180 is a touchscreen or a touch display device to sense a touch input, the processor 170 may change scaling of the corresponding region in response to the sensed touch input.

That is, the processor 170 may control the corresponding region to be projected on the second solid projection surface. In addition, the processor 170 may project the selected region on the second solid projection surface to generate a partially calibrated around view image.

Figure 9C(b) shows, by way of example, that the around view image 810 after calibration may be displayed on the display unit 180. As shown in Figure 9C(b), an around view image, a desired region of which has been calibrated, may be generated and displayed. As a result, user convenience may be improved.

Meanwhile, the processor 170 may control the partially calibrated around view image to be displayed on the display unit 180. At this time, the processor 170 may control the partial region to be displayed in a highlighted fashion or an object indicating the partial region to be displayed in an overlapping fashion on the partially calibrated around view image displayed through the display unit 180.

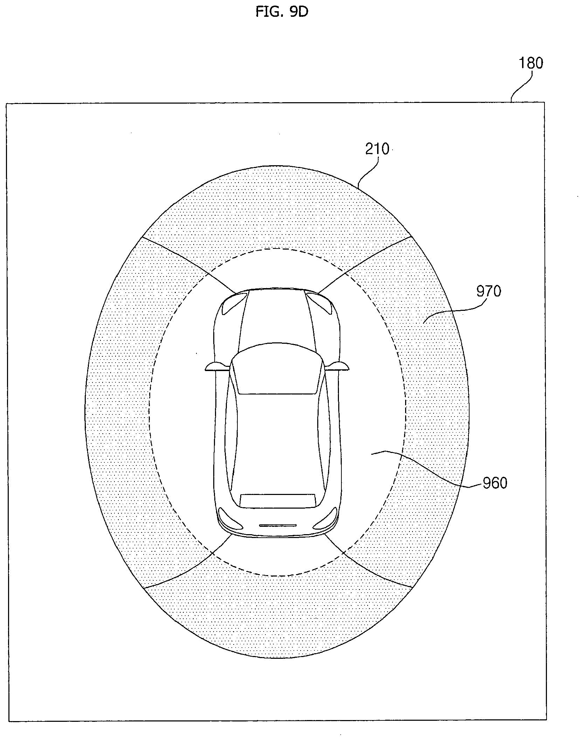

Figure 9D shows, by way of example, that the partially calibrated around view image may be displayed on the display unit 180 while a partial region 970 is highlighted differently from other regions. For example, the partial region 970 may be highlighted by changing brightness, colors, or the like. Consequently, it may be possible for the driver or the user to immediately recognize the partial region.

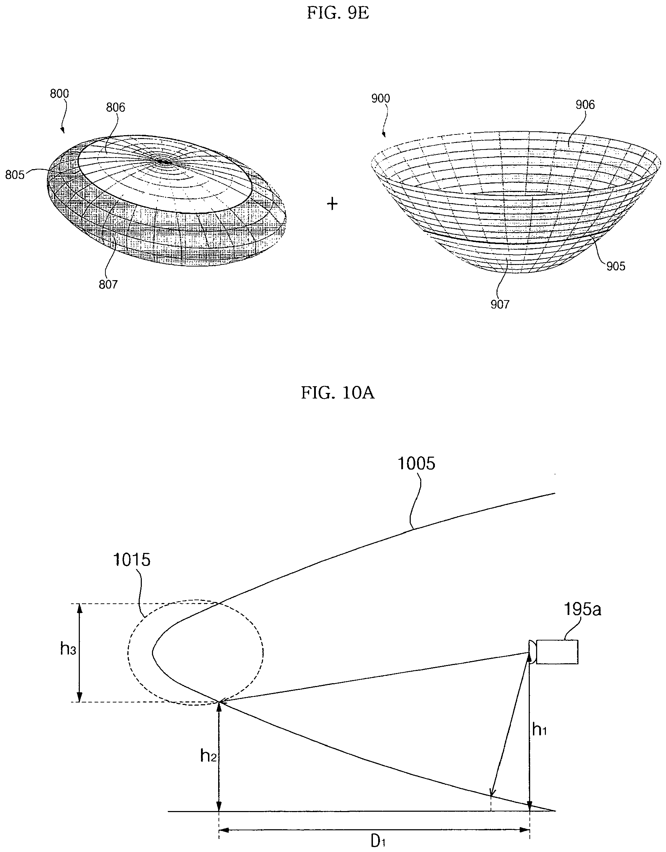

Unlike Figure 9A, on the other hand, the respective images may be projected on the lower region, e.g., the second region 807, of the oval solid projection surface 800 while partial regions of the respective images are projected on an upper region, e.g., a first region 906, of the conical oval solid projection surface 900 as illustrated in Figure 9E.

Figures 10A to 11B show various examples of preventing distortion of a partial region based on the first solid projection surface and the second solid projection surface. Figure 10A shows, by way of example, that when a region 1015 positioned at a second height h2 and spaced from the left side view camera 195a positioned at a first height h1 by a first distance D1 is projected on a first oval solid projection surface 1005, the region 1015 may be distorted. The distorted region 1015 may have a distortion height h3.

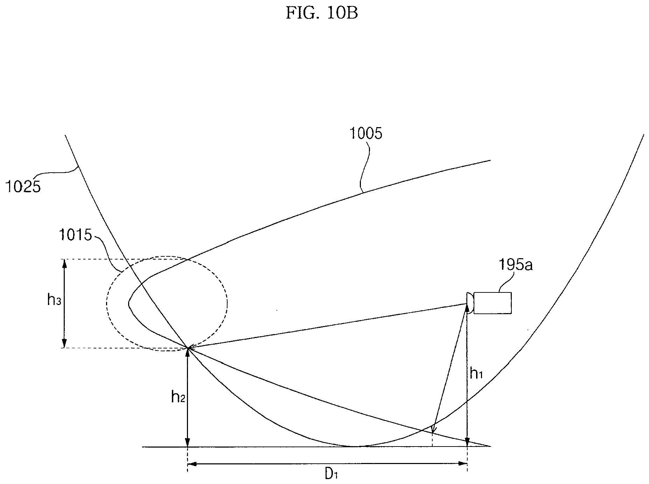

When the region 1015 positioned at a lower height than the left side view camera 195a is projected on the first oval solid projection surface 1005, the region 1015 may be distorted. As shown in Figure 10B, therefore, the processor 170 may control the region 1015 positioned at the second height h2 to be projected on a second parabolic solid projection surface 1025, not the first oval solid projection surface 1005. As a result, it is possible to generate an around view image with reduced distortion of the region 1015.

Here, a convex region of the first solid projection surface 1005 may be different in direction from a convex region of the second solid projection surface 1025. In this way, the processor 170 may generate a partially calibrated around view image using different curvatures of the first solid projection surface and the second solid projection surface, different directions of the convex region of the first solid projection surface and the convex region of the second solid projection surface, or a combination thereof.

In a case in which the first to fourth cameras 195a, 195b, 195c, and 195d mounted at the vehicle are positioned relatively high, the size of a partial region before calibration is relatively reduced by the first solid projection surface. In order to calibrate such reduction, therefore, the processor 170 may set the size of the partial region of the around view image to be increased. As a result, distortion of the partial region of the around view image may be reduced.

Moreover, when a specific object is contained in the around view image generated based on the first solid projection surface, the processor 170 may project a region corresponding to the specific object on the second solid projection surface to generate a partially calibrated around view image.

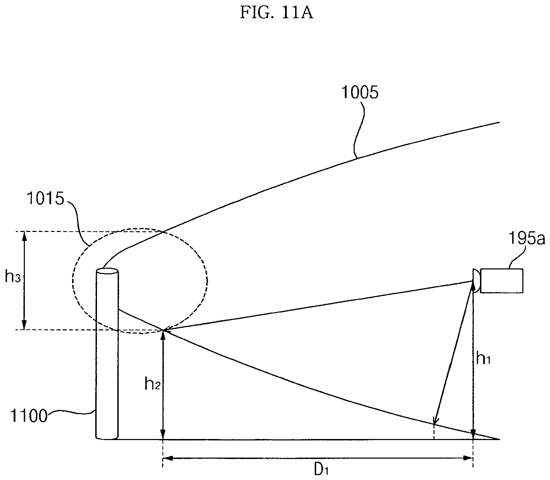

Figure 11A shows, by way of example, that a specific object 1100 may be located at the region 1015 positioned at the second height h2 and spaced from the left side view camera 195a positioned at the first height h1 by the first distance D1 and, when the region 1015 is projected on the first oval solid projection surface 1005, the region 1015 may be distorted. The distorted region 1015 may have a distortion height h3. The specific object 1100 may be, for example, a post, a traffic sign, or another appropriate type of object in the vicinity of the vehicle.

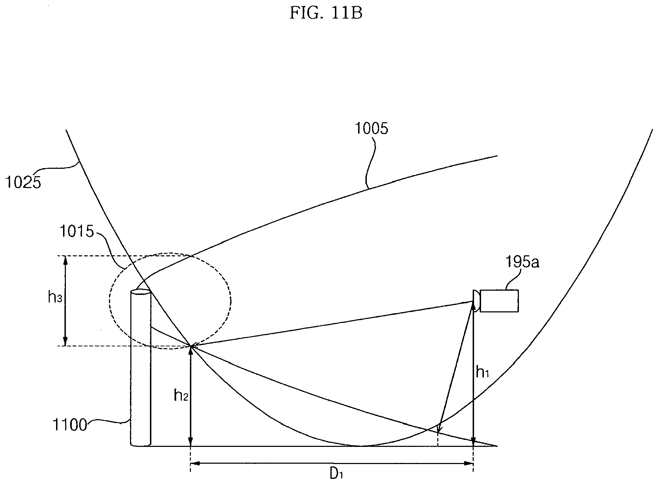

In a case in which the region 1015 positioned at a lower height than the left side view camera 195a is projected on the first oval solid projection surface 1005, the region 1015 may be distorted. As shown in Figure 11B, therefore, the processor 170 may control the region 1015 and the specific object 1100 positioned at the second height h2 to be projected on the first oval solid projection surface 1005 and the second parabolic solid projection surface 1025. As a result, it may be possible to generate an around view image with reduced distortion of the region 1015 and the specific object 1100.

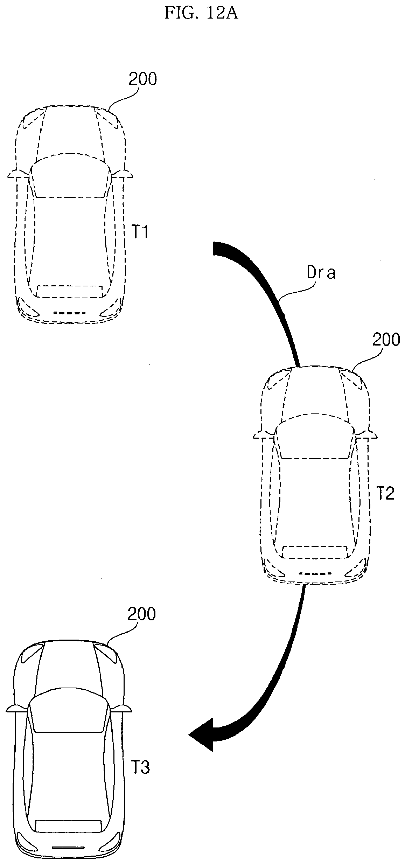

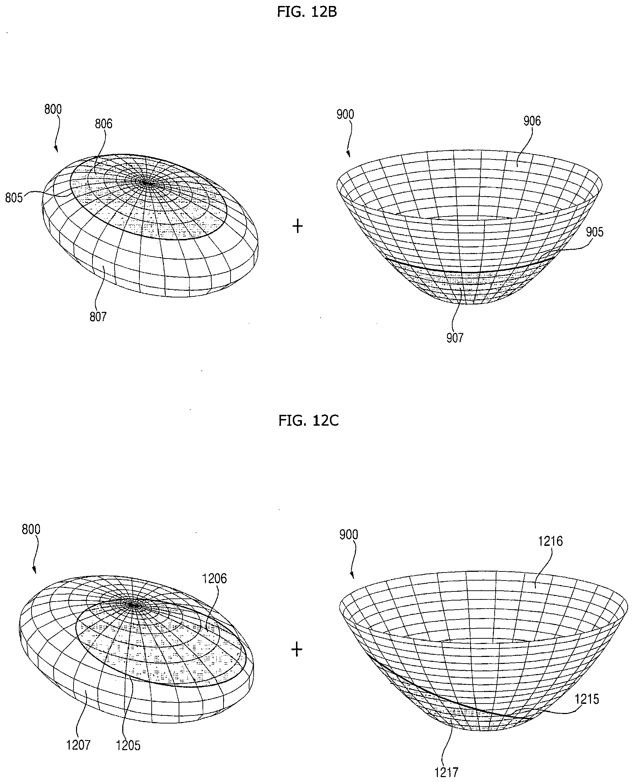

Moreover, the processor 170 may change at least one of a size or a position of at least a partial region of the second solid projection surface in response to a travel direction of the vehicle, which will hereinafter be described in detail with reference to Figures 12A to 12C.

Figure 12A illustrates, by way of example, that the vehicle 200 may move backward in a clockwise direction. The vehicle may move more in a right side rear direction at a second point in time T2 than at a first point in time T1 and may move more in a left side rear direction at a third point in time T3 than at the second point of time.

In this case, the processor 170 may change at least one of the size or the position of at least a partial region of the second solid projection surface in response to the travel direction of the vehicle. That is, at the first point of time T1, the processor 170 may project the respective images from the cameras 195a, 195b, 195c, and 195d on the upper region, e.g., the first region 806, of the oval solid projection surface 800 while partial regions of the respective images are projected on the lower region, e.g., the second region 907, of the conical oval solid projection surface 900 as shown in Figure 12B or 9A.

At the second point in time T2, the vehicle may have moved in the right side rear direction. Consequently, the processor 170 may project the respective images from the cameras 195a, 195b, 195c, and 195d on an right side upper region 1206 of the oval solid projection surface 800 generated according to movement of a curved line 1205 to the right, while partial regions of the respective images are projected on a left side lower region 1217 of the conical oval solid projection surface 900. As a result, it may be possible to generate an around view image with reduced distortion corresponding to the travel direction of the vehicle.

At the third point in time T3, the processor 170 may project the respective images on the upper region, e.g., the first region 806, of the oval solid projection surface 800, while partial regions of the respective images are projected on the lower region, e.g., the second region 907, of the conical oval solid projection surface 900 in the same manner as at the first point of time T1.

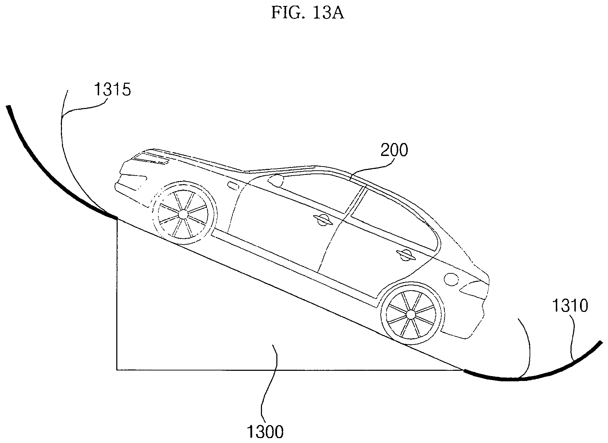

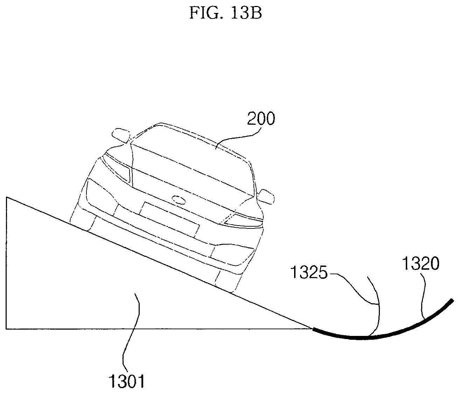

Meanwhile, the processor 170 may change at least one of a tilt or an angle of at least one selected from between the first solid projection surface and the solid projection surface in response to the tilt of the vehicle, which will hereinafter be described in detail with reference to Figures 13A and 13B.

Figure 13A shows, by way of example, that the vehicle 200 may be located on an upward slope 1300. In this case, the processor 170 may generate an around view image with reduced distortion of a specific region behind the vehicle using a second projection surface 1315 similar to a first projection surface 1310 but having a different curvature than the first projection surface 1310. In addition, the processor 170 may adjust the tilt or the angle of the second projection surface 1315 to generate an around view image.

On the other hand, Figure 13B illustrates, by way of example, a case in which the vehicle 200 is positioned on a left incline 1301, e.g., sideways on an incline with the left side of the vehicle positioned downhill. In this case, the processor 170 may generate an around view image with reduced distortion of a specific region at the left side of the vehicle using a second projection surface 1325 similar to a first projection surface 1320, but having a different curvature from the first projection surface 1320. In addition, the processor 170 may adjust the tilt or the angle of the second projection surface 1325 to generate an around view image.

For example, the processor 170 may select a second solid projection surface among a plurality of second solid projection surfaces based on a detected inclination of the vehicle or a road surface. The around view image may include a plurality of regions that correspond to an object having a prescribed inclination, and each of the plurality of regions of the around view image may be generated using a different solid projection surface. Accordingly, various tilt or angle of inclination of the vehicle or road surface may be accounted for to more accurately remove the distortions caused by the inclination. Moreover, in both situations illustrated in Figures 13A and 13B, the processor 170 may continuously process captured images as the position of the vehicle changes to update the displayed around view image. Also, it may be possible

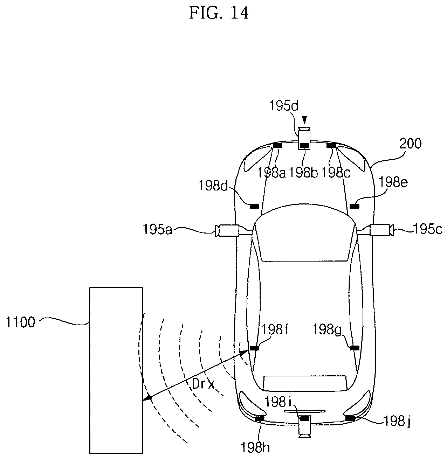

Figure 14 illustrates, by way of example, a plurality of ultrasonic sensors provided on the vehicle for use in generating an around view image. When the vehicle 200 includes a plurality of ultrasonic sensors 198, when a specific object is detected to approach within a predetermined distance from the vehicle based on the ultrasonic sensors 198, the processor 170 may project a region containing the object of the around view image on the second projection surface to generate a partially calibrated around view image.

The vehicle 200 may include a plurality of ultrasonic sensors 198a to 198j to sense approach of a specific object. The first to third ultrasonic sensors 198a, 198b, and 198c may be attached to the front end of the vehicle, the fourth and fifth ultrasonic sensors 198d and 198e may be attached to opposite sides of the front part of the vehicle, the sixth and seventh ultrasonic sensors 198f and 198g may be attached to opposite sides of the rear part of the vehicle, and the eighth to tenth ultrasonic sensors 198h, 198i, and 198j may be attached to the rear end of the vehicle. It should be appreciated the present disclosure is not limited to the number and positions of the ultrasonic sensors, but may include more or less ultrasonic sensors positioned at various locations on the vehicle.

In one example, a specific object 1100 located at the left side rear of the vehicle may be sensed by the sixth ultrasonic sensor 198f. Upon determining that the specific object 1100 is within a predetermined distance from the vehicle through the sixth ultrasonic sensor 198f, the processor 170 may control the specific object 1100 to be projected on the second solid projection surface, not the first solid projection surface.

Here, once the specific object 1100 is detected by the ultrasonic sensor 198g to be with a prescribed distance of the vehicle, the processor 170 may process the images captured by the left side view camera 195a to reduce or remove distortions. For example, the detected specific object 1100 may be the specific object 1100 as previously described with regard to Figure 11A. When the specific object 1100 is located at a region 1015 positioned at a second height h2 and spaced from the left side view camera 195a positioned at a first height h1 by a first distance D1 and, in a case in which the region 1015 is projected on a first solid projection surface 1005, the region 1015 is distorted. The distorted region 1015 may have a distortion height h3. The specific object 1100 may be, for example, a post, a traffic sign, or the like.

When the region 1015 positioned at a lower height than the left side view camera 195a may be projected on the first solid projection surface 1005, the region 1015 may be distorted. Referring again to Figure 11B, therefore, the processor 170 may control the region 1015 and the specific object 1100 positioned at the second height h2 to be projected on a second parabolic solid projection surface 1025. Moreover, the processing of the captured image may continuously be performed as the vehicle moves relative to the specific object 110, and the display of the around view image may be continuously be updated. As a result, it may be possible to generate an around view image with reduced distortion of the region 1015 and the detected specific object 1100.

Meanwhile, the operation method of the around view provision apparatus and the vehicle according to the present disclosure may be implemented as code that can be written on a processor-readable recording medium and thus read by a processor provided in the around view provision apparatus or the vehicle. The processor-readable recording medium may be any type of recording device in which data may be stored in a processor-readable manner. The processor-readable recording medium may include, for example, a read only memory (ROM), a random access memory (RAM), a compact disc read only memory (CD-ROM), a magnetic tape, a floppy disc, and an optical data storage device and may be implemented in the form of a carrier wave transmitted over the Internet. The processor-readable recording medium can be distributed over a plurality of computer systems connected to a network such that processor-readable code is written thereto and executed therefrom in a decentralized manner.

As broadly described and embodied herein, an around view provision apparatus is provided. It is an object of the present disclosure to provide an around view provision apparatus that is capable of reducing distortion of an around view image and a vehicle including the same.

In accordance with an aspect of the present disclosure, the above and other objects may be accomplished by the provision of an around view provision apparatus including first to fourth cameras mounted at a vehicle and a processor to project images from the first to fourth cameras on a first solid projection surface so as to generate an around view image and to project a partial region of the around view image on a second solid projection surface different from the first solid projection surface so as to generate a partially calibrated around view image.

Meanwhile, the around view provision apparatus and the vehicle may each further include at least one ultrasonic sensor mounted at the vehicle, wherein, when a specific object approaches within a predetermined distance from the vehicle based on the at least one ultrasonic sensor, the processor may project a region containing the object of the around view image on the second solid projection surface to generate the partially calibrated around view image. Consequently, it may be possible to generate a more accurate around view image.

On the other hand, the processor may project a region of the around view image corresponding to a selection input on the second solid projection surface to generate the partially calibrated around view image, thereby improving user convenience.

In accordance with another aspect of the present disclosure, an around view provision apparatus may include first to fourth cameras mounted at a vehicle and a processor to generate an around view image based on images from the first to fourth cameras using a first scaling factor corresponding to a first solid shape and to generate a partially calibrated around view image based on a partial region of the around view image using a scaling factor corresponding to a second solid shape different from the first solid shape.

In accordance with another aspect of the present disclosure, a vehicle may include a steering drive unit to drive a steering apparatus, a brake drive unit to drive a brake apparatus, a power source drive unit to drive a power source, first to fourth cameras mounted at the vehicle, and a processor to project images from the first to fourth cameras on a first solid projection surface so as to generate an around view image and to project a partial region of the around view image on a second solid projection surface different from the first solid projection surface so as to generate a partially calibrated around view image.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the and scope of the appended claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. An around view provision apparatus, comprising:
a touch display device (180) to sense a touch input;
first to fourth cameras (195a, 195b, 195c, 195d) mounted on a vehicle; and
a processor (170) configured to generate an around view image (810) using images captured by the first to fourth cameras (195a, 195b, 195c, 195d) and to remove distortions in the around view image (810) using a first projection surface and a second projection surface,
said second projection surface having a curvature different from a curvature of the first projection surface,
the first and second projection surfaces being virtual surfaces having prescribed contours,
wherein the processor (170) is configured to:
project the images from the first to fourth cameras (195a, 195b, 195c, 195d) on the first projection surface to provide a top view or a bird's view based on the vehicle,
scale the images from the first to fourth cameras (195a, 195b, 195c, 195d) using a first scaling factor corresponding to the first projection surface so as to generate the around view image (810),
project a part of the around view image (810) on the second projection surface that is different than the first projection surface so as to generate a calibrated around view image by scaling the images from the first to fourth cameras (195a, 195b, 195c, 195d) using a second scaling factor corresponding to the second projection surface,
wherein the second scaling factor is different from the first scaling factor.

2. The around view provision apparatus according to claim 1, wherein the first projection surface and the second projection surface have different directions of their convex region.

3. The around view provision apparatus according to one of the preceding claims, wherein the processor (170) is configured to:
display the around view image (810) on the touch display device (180) based on the first projection surface,
when an outer area (802) of the around view image (810) is selected by the touch input, project the selected region on the second projection surface to generate the calibrated around view image, and
display the calibrated around view image on the touch display device (180),
wherein a selected region in the calibrated around view image is highlighter.

4. The around view provision apparatus according to one of the preceding claims, wherein the processor (170) is further configured to change at least one of a size or a position of the part on the second projection surface in response to a direction in which the vehicle is travelling.

5. The around view provision apparatus according to one of the preceding claims, wherein the processor (170) is further configured to select the second projection surface based on a detected inclination of the vehicle or a road surface based on respective inclinations.

6. The around view provision apparatus according to one of the preceding claims, wherein the processor (170) is further configured to change at least one of a tilt or an angle of at least one of the first projection surface or the second projection surface based on a tilt of the vehicle, or
wherein the processor (170) is further configured to generate the calibrated around view image using at least one projection surface in addition to the first projection surface and the second projection surface in response to the tilt of the vehicle.

7. A vehicle (200) comprising:
a steering drive unit (752) configured to drive a steering apparatus;
a brake drive unit (753) configured to drive a brake apparatus;
a power source drive unit (754) configured to drive a power source; and
the around view provision apparatus according to any one of the preceding claims.

## Patentansprüche

1. Vorrichtung zur Bereitstellung einer Rundumansicht, umfassend:
eine Berührungsanzeigevorrichtung (180) zum Erfassen einer Berührungseingabe;
erste bis vierte Kameras (195a, 195b, 195c, 195d), die an einem Fahrzeug befestigt sind; und
einen Prozessor (170), der eingerichtet ist zum Erzeugen eines Rundumsichtbilds (810) unter Verwendung von Bildern, die von der ersten bis vierten Kamera (195a, 195b, 195c, 195d) aufgenommen wurden, und zum Entfernen von Verzerrungen in dem Rundumsichtbild (810) unter Verwendung einer ersten Projektionsfläche und einer zweiten Projektionsfläche,
wobei die zweite Projektionsfläche eine von einer Krümmung der ersten Projektionsfläche verschiedene Krümmung aufweist,
wobei die erste und die zweite Projektionsfläche virtuelle Oberflächen mit vorgeschriebenen Konturen sind,
wobei der Prozessor (170) eingerichtet ist zum:
Projizieren der Bilder von der ersten bis vierten Kamera (195a, 195b, 195c, 195d) auf die erste Projektionsfläche, um eine Draufsicht oder eine Vogelperspektive basierend auf dem Fahrzeug bereitzustellen,
Skalieren der Bilder von der ersten bis vierten Kamera (195a, 195b, 195c, 195d) unter Verwendung eines ersten Skalierungsfaktors, welcher der ersten Projektionsfläche entspricht, um das Rundumsichtbild (810) zu erzeugen,
Projizieren eines Teils des Rundumsichtbilds (810) auf die zweite Projektionsfläche, die von der ersten Projektionsfläche verschieden ist, um ein kalibriertes Rundumsichtbild durch Skalieren der Bilder von der ersten bis vierten Kamera (195a, 195b, 195c, 195d) unter Verwendung eines zweiten Skalierungsfaktors, welcher der zweiten Projektionsfläche entspricht, zu erzeugen,
wobei der zweite Skalierungsfaktor von dem ersten Skalierungsfaktor verschieden ist.

2. Vorrichtung zur Bereitstellung einer Rundumansicht nach Anspruch 1, wobei die erste Projektionsfläche und die zweite Projektionsfläche verschiedene Richtungen ihres konvexen Bereichs aufweisen.

3. Vorrichtung zur Bereitstellung einer Rundumansicht nach einem der vorhergehenden Ansprüche, wobei der Prozessor (170) eingerichtet ist zum:
Anzeigen des Rundumsichtbilds (810) auf der Berührungsanzeigevorrichtung (180) basierend auf der ersten Projektionsfläche,
wenn ein äußerer Bereich (802) des Rundumsichtbilds (810) durch die Berührungseingabe ausgewählt wird, Projizieren des ausgewählten Bereichs auf die zweite Projektionsfläche, um das kalibrierte Rundumsichtbild zu erzeugen, und
Anzeigen des kalibrierten Rundumsichtbilds auf der Berührungsanzeigevorrichtung (180),
wobei ein ausgewählter Bereich in dem kalibrierten Rundumsichtbild hervorgehoben wird.

4. Vorrichtung zur Bereitstellung einer Rundumansicht nach einem der vorhergehenden Ansprüche, wobei der Prozessor (170) ferner eingerichtet ist zum Ändern mindestens einer von einer Größe oder einer Position des Teils auf der zweiten Projektionsfläche als Reaktion auf eine Richtung, in welcher das Fahrzeug fährt.

5. Vorrichtung zur Bereitstellung einer Rundumansicht nach einem der vorhergehenden Ansprüche, wobei der Prozessor (170) ferner eingerichtet ist zum Auswählen der zweiten Projektionsfläche basierend auf einer erfassten Neigung des Fahrzeugs oder einer Straßenoberfläche basierend auf jeweiligen Neigungen.

6. Vorrichtung zur Bereitstellung einer Rundumansicht nach einem der vorhergehenden Ansprüche, wobei der Prozessor (170) ferner eingerichtet ist zum Ändern mindestens eines von einer Neigung oder einem Winkel von mindestens einer der ersten Projektionsfläche oder der zweiten Projektionsfläche basierend auf einer Neigung des Fahrzeugs oder
wobei der Prozessor (170) ferner eingerichtet ist zum Erzeugen des kalibrierten Rundumsichtbilds unter Verwendung mindestens einer Projektionsfläche zusätzlich zu der ersten Projektionsfläche und der zweiten Projektionsfläche als Reaktion auf die Neigung des Fahrzeugs.

7. Fahrzeug (200) umfassend:
eine Lenkantriebseinheit (752), die zum Antreiben einer Lenkvorrichtung eingerichtet ist; eine Bremsantriebseinheit (753), die zum Antreiben einer Bremsvorrichtung eingerichtet ist;
eine Stromquellenantriebseinheit (754), die zum Antreiben einer Stromquelle eingerichtet ist; und
die Vorrichtung zur Bereitstellung einer Rundumansicht nach einem der vorhergehenden Ansprüche.

## Revendications

1. Appareil de fourniture d'une vue périphérique, comprenant :
une unité d'affichage tactile (180) pour détecter une entrée tactile ;
une première, deuxième, troisième et quatrième caméras (195a, 195b, 195c, 195d) montées sur un véhicule ; et
un processeur (170) configuré pour produire une image de vue périphérique (810) à l'aide d'images capturées par la première deuxième, troisième et quatrième caméras (195a, 195b, 195c, 195d) et pour éliminer les distorsions dans l'image de vue périphérique (810) à l'aide d'une première surface de projection et d'une seconde surface de projection,
ladite seconde surface de projection ayant une courbure différente d'une courbure de la première surface de projection,
la première et la seconde surfaces de projection étant des surfaces virtuelles ayant des contours prescrits,
le processeur (170) étant configuré pour :
projeter les images provenant de la première, deuxième, troisième et quatrième caméras (195a, 195b, 195c, 195d) sur la première surface de projection pour fournir une vue supérieure ou une vue d'oiseau en fonction du véhicule,
mettre à l'échelle les images provenant de la première deuxième, troisième et quatrième caméras (195a, 195b, 195c, 195d) à l'aide d'un premier facteur d'échelle correspondant à la première surface de projection de manière à produire l'image de vue périphérique (810),
projeter une partie de l'image de vue périphérique (810) sur la seconde surface de projection qui est différente de la première surface de projection de manière à produire une image de vue périphérique étalonnée par mise à l'échelle des images provenant des première, deuxième, troisième et quatrième caméras (195a, 195b, 195c, 195d) à l'aide d'un second facteur d'échelle correspondant à la seconde surface de projection,
le second facteur d'échelle étant différent du premier facteur d'échelle.

2. Appareil de fourniture de vue périphérique selon la revendication 1, la première surface de projection et la seconde surface de projection ayant des directions différentes de leur région convexe.

3. Appareil de fourniture de vue périphérique selon l'une quelconque des revendications précédentes, le processeur (170) étant configuré pour :
afficher l'image de vue périphérique (810) sur l'unité d'affichage tactile (180) en fonction de la première surface de projection,
lorsqu'une zone extérieure (802) de l'image de vue périphérique (810) est sélectionnée par l'entrée tactile, projeter la région sélectionnée sur la seconde surface de projection pour produire l'image de vue périphérique étalonnée, et
afficher l'image de vue périphérique étalonnée sur l'unité d'affichage tactile (180), une région sélectionnée dans l'image de vue périphérique étalonnée étant un surligneur.

4. Appareil de fourniture de vue périphérique selon l'une quelconque des revendications précédentes, le processeur (170) étant en outre configuré pour modifier au moins une taille ou une position de la partie sur la seconde surface de projection en réponse à une direction dans laquelle se déplace le véhicule.

5. Appareil de fourniture de vue périphérique selon l'une quelconque des revendications précédentes, le processeur (170) étant en outre configuré pour sélectionner la seconde surface de projection en fonction d'une inclinaison détectée du véhicule ou d'une surface de route en fonction des inclinaisons respectives.

6. Appareil de fourniture de vue périphérique selon l'une quelconque des revendications précédentes, le processeur (170) étant en outre configuré pour modifier au moins un basculement ou un angle de la première surface de projection et/ou de la seconde surface de projection en fonction d'un basculement du véhicule, ou
le processeur (170) étant en outre configuré pour produire l'image de vue périphérique étalonnée à l'aide d'au moins une surface de projection en plus de la première surface de projection et de la seconde surface de projection en réponse au basculement du véhicule.

7. Véhicule (200) comprenant :
une unité de commande de direction (752) conçue pour commander un appareil de direction ;
une unité de commande de frein (753) conçue pour commander un appareil de frein ;
une unité de commande de source de puissance (754) conçue pour commander une source de puissance ; et
l'appareil de fourniture de vue périphérique selon l'une quelconque des revendications précédentes.
